# FASCICULE DE BREVET EUROPEEN

(11) **EP 3 293 437 B1**
(45) Date de publication et mention de la délivrance du brevet: **13.05.2020**
(21) Numéro de dépôt: 17189694.7
(22) Date de dépôt: 06.09.2017
(51) Int. Cl.: F16N 31/02, F16H 57/04

(54) **MÉCANISME À LUBRIFICATION PAR BARBOTAGE COMPRENANT UN ENGRENAGE DE TRANSMISSION**
TAUCHSCHMIERUNGSMECHANISMUS, DER EIN ÜBERTRAGUNGSGETRIEBE UMFASST
SPARGING LUBRICATION MECHANISM COMPRISING A DRIVE GEAR

(30) Priorité: 07.09.2016 FR 1601315
(43) Date de publication de la demande: 14.03.2018
(73) Titulaire: Thales, 92400 Courbevoie (FR)
(72) Inventeur: BARBIER, Nicolas, 91470 Limours (FR); HOUPERT, Bastien, 91470 Limours (FR); QUÉGUINER, Morgan, 91470 Limours (FR)
(74) Mandataire: Lavoix

(56) Documents cités:
- JP-A- H0 754 973
- JP-A- H04 366 234
- JP-A- H11 350 531
- JP-A- 2008 128 327
- JP-A- 2009 191 886
- JP-U- S 508 375
- US-A- 4 693 133

## Description

La présente invention concerne le domaine des mécanismes à lubrification par barbotage, comprenant un engrenage de transmission possédant deux roues dentées engrenant l'une avec l'autre pour l'entraînement d'une roue dentée (roue « menée ») par l'autre (roue « menante »).

Pour limiter l'usure d'un engrenage, il est nécessaire de lubrifier l'engrenage. Il est en particulier possible de plonger l'engrenage au moins partiellement dans un bain de lubrifiant. On parle alors de lubrification par barbotage.

On connait des mécanismes à lubrification par barbotage tels que décrit dans JP H04 366234 A, JP H11 350531 A, US 4 693 133 A, JP S50 8375 U, JP 2008 128327, JP 2009 191886 A et JP H07 54973 A.

Un des buts de l'invention est d'améliorer la lubrification par barbotage dans un mécanisme comprenant un engrenage de transmission.

A cet effet, l'invention propose un mécanisme à lubrification par barbotage, comprenant un carter et un engrenage de transmission disposé à l'intérieur du carter, l'engrenage possédant deux roues dentées munies de dentures respectives engrenant dans une zone d'engrènement, chaque denture possédant une première face latérale et une deuxième face latérales opposées, le mécanisme comprenant en outre un organe de canalisation distinct du carter, fixe par rapport au carter, délimitant un canal et disposé en regard des premières faces latérales au droit de la zone d'engrènement pour canaliser du lubrifiant expulsé de la zone d'engrènement à partir des premières faces latérales circonférentiellement dans la zone d'engrènement.

Le mécanisme à lubrification par barbotage comprend en option une ou plusieurs des caractéristiques suivantes, prises isolément ou selon toutes les combinaisons techniquement possibles :
- l'organe de canalisation coopère de manière étanche avec une surface d'étanchéité prévue sur au moins une roue dentée ;
- l'organe de canalisation coopère de manière étanche avec une surface d'étanchéité de chaque roue dentée ;
- au moins une roue dentée possède une surface d'étanchéité perpendiculaire à l'axe de rotation de cette roue dentée ;
- au moins une roue dentée possède une surface d'étanchéité de révolution autour de l'axe de rotation de la roue dentée et présentant une étendue suivant cet axe de rotation ;
- au moins une roue dentée possède une surface d'étanchéité cylindrique centrée sur l'axe de rotation de cette roue dentée ;
- l'organe de canalisation est configuré pour racler une surface d'étanchéité d'une roue dentée ;
- l'organe de canalisation coopère de manière étanche avec une surface d'étanchéité d'au moins une roue dentée par l'intermédiaire d'un système d'étanchéité à chicane ; et
- il comprend un déflecteur disposé dans l'espace délimité entre les dentures des deux roues dentées immédiatement en aval de la zone d'engrènement en considérant le sens de rotation des roues dentées autour de leurs axes de rotation, le déflecteur s'étendant sur toute la largeur des dents des roues dentées de l'engrenage et étant configuré pour dévier du lubrifiant circulant circonférentiellement autour d'une roue dentée à l'écart de celle-ci et/ou pour diriger ce lubrifiant circonférentiellement autour de l'autre roue dentée.

L'invention et ses avantages seront mieux compris à la lecture de la description qui va suivre, donnée uniquement à titre d'exemple non limitatif, et faite en référence aux dessins annexés, sur lesquels :
- La Figure 1 est une vue en coupe d'un mécanisme comprenant un engrenage de transmission possédant deux roues dentées engrenant l'une avec l'autre ;
- La Figure 2 est vue de dessus de l'engrenage de transmission ;
- La Figure 3 est une vue en coupe selon III-III sur la Figure 2, illustrant un organe de canalisation du mécanisme ;
- Les Figures 4 et 5 sont des vues analogues à celle de la Figure 1 illustrant des variantes.

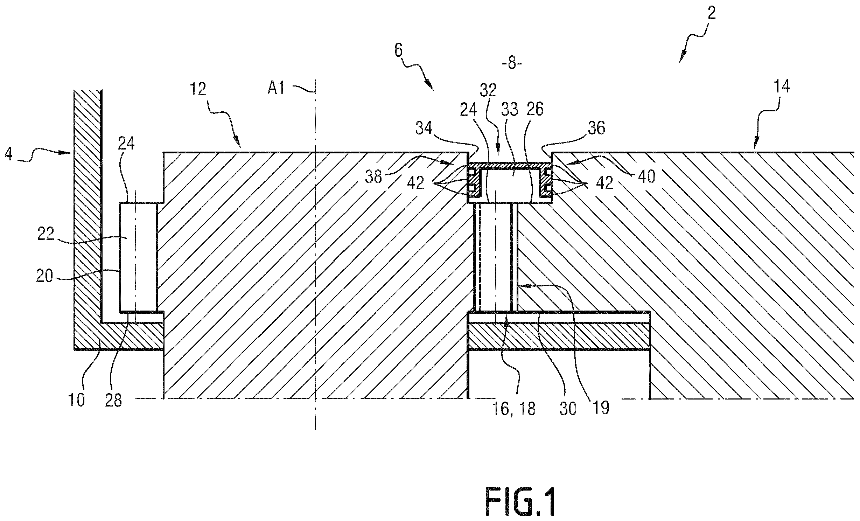

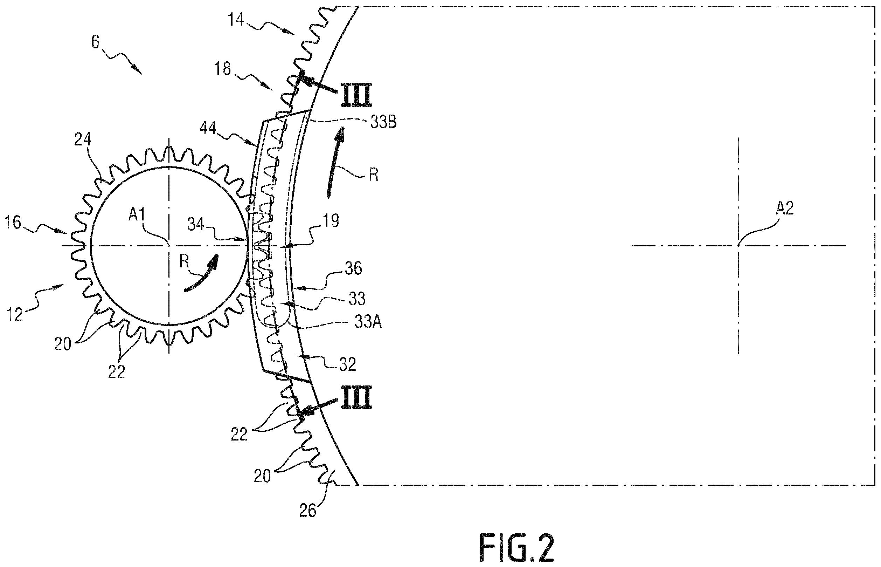

Le mécanisme 2 à lubrification par barbotage illustré sur les Figures 1 et 2 comprend un carter 4 destiné à recevoir un lubrifiant et un engrenage 6 de transmission disposé à l'intérieur du carter 4.

Le carter 4 délimite un volume interne 8. Le volume interne 8 est destiné à recevoir des organes mécaniques de transmission incluant l'engrenage 6. En particulier le volume interne 8 est prévu pour contenir d'autres organes mécaniques de transmission en plus de l'engrenage 6.

Le carter 4 est représenté partiellement, seule une paroi de carter 10 étant visible sur la Figure 1. La paroi de carter 10 est par exemple une paroi inférieure du carter 10.

Le carter 4 est étanche configuré pour contenir un lubrifiant pour la lubrification des organes mécaniques du mécanisme reçus dans le carter 4, et en particulier de l'engrenage 6.

L'engrenage 6 comprend des roues dentées 12, 14, chaque roue dentée 12, 14 possédant une denture 16, 18 s'étendant sur la circonférence de la roue dentée 12, 14, les dentures 16, 18 respectives des roues dentées 12, 14 engrenant l'une avec l'autre dans une zone d'engrènement 19. Chaque denture 16, 18 est formée d'une alternance de dents 20 et d'espaces 22 entre les dents 20 sur la circonférence de la roue dentée 12, 14.

La denture 16, 18 de chaque roue dentée 12, 14 possède une première face latérale 24, 26 et une deuxième face latérale 28, 30 opposées. Chaque dent 20 d'une denture 16, 18 s'étend entre la première face latérale 24, 26 et la deuxième face latérale 28, 30 de la denture 16, 18. Chaque espace 22 d'une denture 16, 18 débouche à une extrémité sur la première face latérale 24, 26 de cette denture 16, 18 et à l'autre extrémité sur la deuxième face latérale 28, 30 de cette denture 16, 18.

Les premières faces latérales 24, 26 des dentures 16, 18 sont orientées du même côté dans la zone d'engrènement 19 et les deuxièmes faces latérales 28, 30 des dentures 16, 18 sont orientées du même côté dans la zone d'engrènement 19.

Dans la zone d'engrènement 19, les dentures 16, 18 sont en prise l'une avec l'autre. Dans la zone d'engrènement 19, les dents 20 de chaque denture 16, 18 sont insérées dans les espaces 22 de l'autre denture 16, 18.

L'engrenage 6 est configuré pour la transmission d'un couple entre les roues dentées 12, 14. En particulier, l'engrenage 6 est configuré pour la transmission d'un couple d'une roue dentée dite « menante » à une roue dentée dite « menée ».

Les roues dentées 12, 14 sont montées rotatives autour d'axes de rotation A1, A2 respectifs. Les axes de rotation A1, A2 des deux roues dentées 12, 14 sont distincts. L'engrenage est ici à axes parallèles. Les axes de rotation A1, A2 des roues dentées 12, 14 sont parallèles entre eux. La première face latérale 24, 26 et la deuxième face latérale 28, 30 de chaque denture 16, 18 sont ici perpendiculaires à l'axe de rotation A1, A2 de la roue dentée portant cette denture.

Les roues dentées 12, 14 sont ici montées rotatives sur la paroi de carter 10. La paroi de carter 10 est par exemple une paroi de fond sensiblement horizontale, les axes de rotation A1, A2 étant sensiblement verticaux.

Dans l'exemple illustré, les dents 20 de chaque denture 16, 18 sont droites. Elles s'étendent entre la première face latérale 24, 26 et la deuxième face latérale 28, 30 sensiblement parallèlement à l'axe de rotation A1, A2 de la roue dentée 12, 14. Chaque espace 22 de la denture 16, 18 débouche sur la première face latérale 24, 26 et la deuxième face latérale 28, 30 axialement relativement à l'axe de rotation A1, A2 de la roue dentée 12, 14. En variante, les dents 20 sont par exemple en hélice ou en chevron. Chaque espace 22 débouche sur la première face latérale 24, 26 et la deuxième face latérale 28, 30 obliquement relativement à l'axe de rotation A1, A2 de la roue dentée 12, 14.

En fonctionnement, du lubrifiant est présent dans le carter 4. Du lubrifiant est en particulier présent dans les espaces 22 des dentures 16, 18. L'insertion d'une dent 20 d'une denture 16, 18 dans un espace 22 de l'autre denture 16, 18 dans la zone d'engrènement 19 chasse le lubrifiant de cet espace 22 vers les extrémités de l'espace 22, qui débouchent sur les première et deuxième faces latérales 24, 26 ; 28, 30 de la denture 16, 18.

Ainsi, lorsque les roues dentées 12, 14 tournent, dans la zone d'engrènement 19, des jets de lubrifiant sont expulsés des espaces 22 des dentures 16, 18 à partir des premières et deuxièmes faces 24, 26 ; 28, 30 des dentures 16, 18. Dans le cas présent, les roues dentées 12, 14 sont à axes parallèles et à dents 20 droites, de sorte que les jets de lubrifiant sont sensiblement axiaux.

Ce phénomène est susceptible de perturber l'écoulement du lubrifiant autour de la zone d'engrènement 19 et de provoquer une accumulation de lubrifiant en amont de la zone d'engrènement 19 en considérant le sens de rotation des roues dentées (Flèches R sur la Figure 2). En outre, les jets de lubrifiant sont susceptibles de perturber le fonctionnement d'autres organes mécaniques de transmission du mécanisme logés dans le carter 4.

Pour pallier ces inconvénients, le mécanisme 2 comprend en outre un organe de canalisation 32 disposé en regard des premières faces latérales 24, 26 des dentures 16, 18 et à cheval sur la zone d'engrènement 19 pour collecter et canaliser du lubrifiant expulsé de la zone d'engrènement 19 à partir desdites premières faces latérales 24, 26.

L'organe de canalisation 32 est configuré pour forcer le lubrifiant collecté à circuler circonférentiellement par rapport à au moins une des roues dentées 12, 14, dans la zone d'engrènement 19. L'organe de canalisation 32 est ici configuré pour forcer le lubrifiant à circuler circonférentiellement par rapport à la roue dentée 14.

L'organe de canalisation 32 reste en permanence en regard de la zone d'engrènement 19. L'organe de canalisation 32 est immobile par rapport aux axes de rotation A1, A2 des roues dentées 12, 14. L'organe de canalisation 32 est immobile par rapport au carter 4.

Dans l'exemple illustré, l'organe de canalisation 32 s'étend circonférentiellement par rapport à une roue dentée, ici la roue dentée 14. L'organe de canalisation 32 s'étend tangentiellement à l'autre roue dentée, ici la roue dentée 12.

L'organe de canalisation 32 comprend, sur une face tournée vers la zone d'engrènement 19, un canal 33 pour canaliser le lubrifiant expulsé de la zone d'engrènement 19 à partir desdites premières faces latérales 24, 26.

Le canal 33 est configuré pour collecter les jets de lubrifiant expulsés des premières faces latérales 24, 26 et pour canaliser ces jets de lubrifiant circonférentiellement autour d'au moins une des roues dentées 12, 14, ici la roue dentée 14.

Le canal 33 s'étend suivant une ligne longitudinale L. La ligne longitudinale L s'étend ici circonférentiellement par rapport à la roue dentée 14.

L'organe de canalisation 32 s'étend circonférentiellement selon une étendue angulaire limitée autour de l'axe de rotation de l'une des roues dentées 12, 14, i.e. sur une fraction de la circonférence de ladite roue dentée parmi les roues dentées 12, 14. Avantageusement, l'étendue angulaire est inférieure à 90°. L'organe de transmission 32 s'étend ici circonférentiellement selon une étendue angulaire limitée autour de l'axe de rotation de la roue dentée 14, i.e. sur une fraction de la circonférence de la roue dentée 14.

Le canal 33 possède une première extrémité longitudinale 33A fermée et une deuxième extrémité longitudinale 33B ouverte. La deuxième extrémité longitudinale 33B débouche ici circonférentiellement par rapport à la roue dentée 14.

Le canal 33 possède une ouverture longitudinale 33C d'étendant le long du canal 33 et tournée vers les faces latérales 24, 26. L'ouverture longitudinale 33C est située sur la face de l'organe de canalisation 32 comprend tournée vers la zone d'engrènement 19

La première extrémité longitudinale 33A est située de manière que les jets de lubrifiants pénètrent dans le canal 33 à sa première extrémité longitudinale 33A, par l'ouverture longitudinale 33C.

La première extrémité longitudinale 33A est située au droit de la zone d'engrènement 19, où commencent à se former les jets de lubrifiant.

Le canal 33 comprend à sa première extrémité longitudinale 33A une surface de déflexion 33D configurée pour dévier les jets de lubrifiant suivant la ligne longitudinale L du canal 33. La surface de déflexion 33D est par exemple inclinée et/ou arrondie. Elle est ici arrondie.

L'organe de canalisation 32 est configuré pour coopérer étroitement avec des surfaces 34, 36 des roues dentées 12, 14 pour limiter le passage de lubrifiant entre l'organe de canalisation 32 et les roues dentées 12, 14.

Dans un mode de réalisation, la surface d'étanchéité 34, 36 de chaque roue dentée 12, 16 est une surface de révolution autour de l'axe de rotation A1, A2 de cette roue dentée 12, 16, présentant une étendue axiale suivant l'axe de rotation de la roue dentée 12, 16. La surface d'étanchéité 34, 36 de chaque roue dentée 12, 14 s'étend en saillie axialement par rapport à la première face latérale 24, 26 de la denture 16, 18 de cette roue dentée 12, 14.

La surface d'étanchéité 34, 36 de chaque roue dentée 12, 16 est ici une surface cylindrique centrée sur l'axe de rotation A1, A2 de la roue dentée 12, 16.

Les surfaces d'étanchéité 34, 36 se font face l'une l'autre au droit de la zone d'engrènement 19, et l'organe de canalisation 32 est inséré dans l'intervalle délimité entre les surfaces d'étanchéité 34, 36 des deux roues dentées 12, 14.

Dans un mode de réalisation, l'organe de canalisation 32 coopère avec la surface d'étanchéité 34, 36 de chaque roue dentée 12, 14 par l'intermédiaire de systèmes d'étanchéité à chicane 38, 40.

Dans l'exemple illustré, l'organe de canalisation 32 coopère avec chaque surface d'étanchéité 34, 36 par un système d'étanchéité à chicane 38, 40 comprenant trois chicanes d'étanchéité 42.

En fonctionnement, dans la zone d'engrènement, du lubrifiant présent dans les espaces 20 des dentures 16, 18 est expulsé sur les premières faces latérales 24, 26 des dentures 16, 18. Ce lubrifiant est collecté par l'organe de canalisation 32 et entraîné circonférentiellement autour des roues dentées 12, 14 du fait de la rotation de ces dernières autour de leurs axes de rotation A1, A2 respectifs. L'organe de canalisation 32 canalise le lubrifiant circonférentiellement du côté des premières faces latérales 24, 26 des dentures 16, 18.

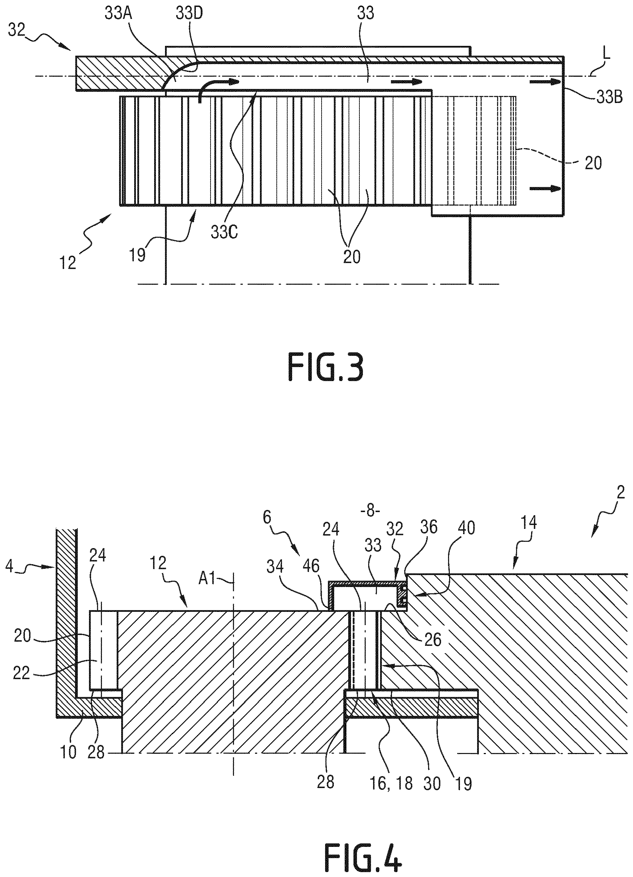

Plus spécifiquement, comme visible sur la Figure 3, les jets de lubrifiant pénètrent dans le canal 33, par l'ouverture longitudinale 33C, à la première extrémité longitudinale 33A du canal 33, sont déviés, circulent le long du canal 33, et débouchent à la deuxième extrémité longitudinale 33B, circonférentiellement.

Par ailleurs, en aval de la zone d'engrènement, la denture 20 de chaque roue dentée 12, 14 tend à entraîner le lubrifiant circonférentiellement autour de cette roue dentée 12, 14. Lorsqu'une roue dentée 12 (à gauche sur la Figure 2) est de plus petit diamètre que l'autre 14 (à droite sur la Figure 2), le lubrifiant circule à la même vitesse circonférentielle autour des deux roues dentées 12, 14, mais parcourt une plus petite distance autour de la roue dentée 12 de petit diamètre et une plus grande distance autour de la roue dentée 14 de grand diamètre. Il en résulte un déséquilibre dans la répartition du lubrifiant.

Pour obvier cet inconvénient, comme illustré sur les Figure 2 et 3, l'organe de canalisation 32 est configuré pour canaliser le lubrifiant circonférentiellement autour de la roue dentée 14 de plus grand diamètre. Le canal 33 s'étend circonférentiellement par rapport à la roue dentée 14 de plus grand diamètre.

En outre, le mécanisme comprend en option un déflecteur 44 disposé dans l'espace délimité entre les dentures 16, 18 des deux roues dentées 12, 14 immédiatement en aval de la zone d'engrènement 19, le déflecteur 44 étant configuré pour dévier du lubrifiant circulant circonférentiellement autour de la roue dentée 12 de petit diamètre à l'écart de celle-ci et/ou pour diriger ce lubrifiant circonférentiellement autour de la roue dentée 14 de grand diamètre.

Le déflecteur 44 s'étend ici à partir de la circonférence de la roue dentée 12 de petit diamètre et sensiblement circonférentiellement par rapport à la roue dentée 14 de grand diamètre. Ce déflecteur 44 permet de dévier du lubrifiant circulant circonférentiellement autour de la roue dentée 12 de petit diamètre à l'écart de celle-ci et de diriger ce lubrifiant circonférentiellement autour de la roue dentée 14 de grand diamètre.

De préférence, le déflecteur 44 s'étend sensiblement sur toute la largeur de la denture 16 de la roue dentée 12 de petit diamètre. La largeur de la denture 16 est la distance entre la première face latérale 24 et la deuxième face latérale 28 de la denture 16.

Dans l'exemple illustré, comme visible sur la Figure 3, le déflecteur 44 est ici venu de matière avec l'organe de canalisation 32.

La variante de la Figure 4 diffère de celle des Figures 1 à 3 en ce que l'organe de canalisation 32 est configuré pour coopérer de manière étanche avec une surface d'étanchéité 34 d'une roue dentée 12 qui est perpendiculaire à l'axe de rotation A1 de cette roue dentée 12. En particulier, l'organe de canalisation 32 comprend un bord latéral muni d'un racleur 46 configuré pour racler la surface d'étanchéité 34 en question.

Sur la Figure 4, la roue dentée 12 de petit diamètre est munie d'une surface d'étanchéité 34 perpendiculaire à l'axe de rotation A1 de cette roue dentée, et la roue dentée 14 de grand diamètre est munie d'une surface d'étanchéité 36 de révolution autour de l'axe de rotation A2 de la roue dentée 14 de grand diamètre. En variante, la configuration est inversée.

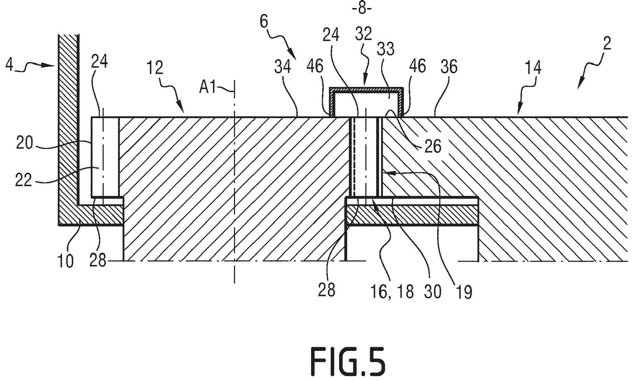

La variante de la Figure 5 diffère de celle de la Figure 4 en ce que l'organe de canalisation 32 est configuré pour coopérer de manière étanche avec les surfaces d'étanchéité 34 et 36 de chaque roue dentée 12, 14 qui sont perpendiculaires à l'axe de rotation A1, A2 de ces roues dentées 12, 14. En particulier, chaque bord latéral de l'organe de canalisation 32 est configuré pour coopérer de manière étanche avec la surface d'étanchéité 34 ,36 d'une roue dentée 12, 14 respective. Chaque bord latéral est muni à cet effet d'un racleur 46 configuré pour racler la surface d'étanchéité 34, 36 correspondante.

Sur les Figures 1, 4 et 5, les premières faces latérales 24, 26 des dentures 16, 18 sont tournées vers une région du volume interne 8 du carter 4 qui est libre ou dans laquelle se situent d'autres organes mécaniques. L'organe de canalisation 32 est disposé de façon à empêcher les jets d'être projetés dans cette espace.

Les deuxièmes faces latérales 28, 30 des dentures 16, 18 sont tournées vers la paroi de carter 10, de sorte que des jets de lubrifiant expulsés des espaces 22 des dentures sur les deuxièmes faces latérales 28, 30 sont bloqués par cette paroi de carter 10. En variante, le mécanisme 2 comprend en outre un autre organe de canalisation similaire à l'organe de canalisation 32 et disposé du côté des deuxièmes faces latérales 28, 30 des dentures 16, 18 pour canaliser du lubrifiant expulsé des espaces 22 dans la zone d'engrènement 19.

L'organe de canalisation 32 est distinct du carter 4 et est monté à l'intérieur du carter 4, par tout moyen approprié, par exemple par collage, soudage, vissage et/ou rivetage.

Dans l'exemple illustré, l'engrenage 6 est à axes parallèles. Dans une variante, l'engrenage 6 est à axes non parallèles, en particulier à axes concourants.

L'invention s'applique à tout système mécanique comprenant un engrenage. En particulier, le mécanisme 2 peut être par exemple un réducteur ou une boîte de vitesse manuelle ou automatique.

## Revendications

1. Mécanisme à lubrification par barbotage, comprenant un carter (4) et un engrenage (6) de transmission disposé à l'intérieur du carter (4), l'engrenage (6) possédant deux roues dentées (12, 14) munies de dentures (16, 18) respectives engrenant dans une zone d'engrènement (19), chaque denture (16, 18) possédant une première face latérale (24, 26) et une deuxième face latérales (28, 30) opposées, le mécanisme comprenant en outre un organe de canalisation (32) distinct du carter (4), fixe par rapport au carter (4), délimitant un canal (33) et disposé en regard des premières faces latérales (24, 26) au droit de la zone d'engrènement (19) pour canaliser du lubrifiant expulsé de la zone d'engrènement (19) à partir des premières faces latérales (24, 26) circonférentiellement dans la zone d'engrènement (19).

2. Mécanisme selon la revendication 1, dans lequel l'organe de canalisation (32) coopère de manière étanche avec une surface d'étanchéité prévue sur au moins une roue dentée (12, 14).

3. Mécanisme selon la revendication 2, dans lequel l'organe de canalisation (32) coopère de manière étanche avec une surface d'étanchéité de chaque roue dentée (12, 14).

4. Mécanisme selon la revendication 2 ou 3, dans lequel au moins une roue dentée (12, 14) possède une surface d'étanchéité perpendiculaire à l'axe de rotation de cette roue dentée (12, 14).

5. Mécanisme selon l'une quelconque des revendications 2 à 4, dans lequel au moins une roue dentée (12, 14) possède une surface d'étanchéité de révolution autour de l'axe de rotation de la roue dentée (12, 14) et présentant une étendue suivant cet axe de rotation.

6. Mécanisme selon l'une quelconque des revendications 2 à 5, dans lequel au moins une roue dentée (12, 14) possède une surface d'étanchéité cylindrique centrée sur l'axe de rotation de cette roue dentée (12, 14).

7. Mécanisme selon l'une quelconque des revendications 2 à 6, dans lequel l'organe de canalisation (32) est configuré pour racler une surface d'étanchéité d'une roue dentée (12, 14).

8. Mécanisme selon l'une quelconque des revendications 2 à 7, dans lequel l'organe de canalisation (32) coopère de manière étanche avec une surface d'étanchéité d'au moins une roue dentée par l'intermédiaire d'un système d'étanchéité à chicane.

9. Mécanisme selon l'une quelconque des revendications précédentes, comprenant un déflecteur (44) disposé dans l'espace délimité entre les dentures (16, 18) des deux roues dentées (12, 14) immédiatement en aval de la zone d'engrènement (19) en considérant le sens de rotation des roues dentées (12, 14) autour de leurs axes de rotation (A1, A2), le déflecteur (44) s'étendant sur toute la largeur des dents des roues dentées (12, 14) de l'engrenage (6) et étant configuré pour dévier du lubrifiant circulant circonférentiellement autour d'une roue dentée (12) à l'écart de celle-ci et/ou pour diriger ce lubrifiant circonférentiellement autour de l'autre roue dentée (14).

10. Mécanisme selon l'une quelconque des revendications précédentes, dans lequel l'organe de canalisation (32) s'étend circonférentiellement par rapport à la roue de plus grand diamètre (14).

11. Mécanisme selon l'une quelconque des revendications précédentes, dans lequel l'organe de canalisation (32) possède une première extrémité longitudinale fermée (33A) et une deuxième extrémité longitudinale ouverte (33B).

## Patentansprüche

1. Tauchschmierungsmechanismus, umfassend ein Gehäuse (4) und ein Übertragungsgetriebe (6), das im Inneren des Gehäuses (4) angeordnet ist, wobei das Getriebe (6) zwei Zahnräder (12, 14) besitzt, die mit jeweiligen Zahnungen (16, 18) versehen sind, die in einer Eingriffszone (19) eingreifen, wobei jede Zahnung (16, 18) eine erste Seitenfläche (24, 26) und eine zweite Seitenfläche (28, 30) besitzt, die gegenüberliegen, wobei der Mechanismus ferner eine Kanalisationseinrichtung (32) umfasst, die sich von dem Gehäuse (4) unterscheidet, die in Bezug auf das Gehäuse (4) fest ist, einen Kanal (33) begrenzt und den ersten Seitenflächen (24, 26) zugewandt senkrecht zur Eingriffszone (19) angeordnet ist, um aus der Eingriffszone (19) ausgehend von den ersten Seitenflächen (24, 26) ausgestoßenes Schmiermittel in der Eingriffszone (19) umfänglich zu kanalisieren.

2. Mechanismus nach Anspruch 1, wobei die Kanalisationseinrichtung (32) mit einer Abdichtfläche, die auf mindestens einem Zahnrad (12, 14) vorgesehen ist, dicht zusammenwirkt.

3. Mechanismus nach Anspruch 2, wobei die Kanalisationseinrichtung (32) mit einer Abdichtfläche jedes Zahnrads (12, 14) dicht zusammenwirkt.

4. Mechanismus nach Anspruch 2 oder 3, wobei mindestens ein Zahnrad (12, 14) eine Abdichtfläche besitzt, die senkrecht zur Rotationsachse dieses Zahnrads (12, 14) ist.

5. Mechanismus nach einem der Ansprüche 2 bis 4, wobei mindestens ein Zahnrad (12, 14) eine Rotations-Abdichtfläche um die Rotationsachse des Zahnrads (12, 14) besitzt und eine Ausdehnung gemäß dieser Rotationsachse aufweist.

6. Mechanismus nach einem der Ansprüche 2 bis 5, wobei mindestens ein Zahnrad (12, 14) eine zylindrische Abdichtfläche besitzt, die auf der Rotationsachse dieses Zahnrads (12, 14) zentriert ist.

7. Mechanismus nach einem der Ansprüche 2 bis 6, wobei die Kanalisationseinrichtung (32) eingerichtet ist, um eine Abdichtfläche eines Zahnrads (12, 14) abzustreifen.

8. Mechanismus nach einem der Ansprüche 2 bis 7, wobei die Kanalisationseinrichtung (32) mit einer Abdichtfläche von mindestens einem Zahnrad über ein Abdichtsystem mit Leitblech dicht zusammenwirkt.

9. Mechanismus nach einem der vorangehenden Ansprüche, umfassend einen Ablenker (44), der in dem zwischen den Zahnungen (16, 18) der zwei Zahnräder (12, 14) unmittelbar nach der Eingriffszone (19) begrenzten Raum angeordnet ist, unter Berücksichtigung der Rotationsrichtung der Zahnräder (12, 14) um ihre Rotationsachsen (A1, A2), wobei sich der Ablenker (44) über die gesamte Breite der Zähne der Zahnräder (12, 14) des Getriebes (6) erstreckt und eingerichtet ist, um Schmiermittel abzulenken, das umfänglich um ein Zahnrad (12) beabstandet von diesem zirkuliert und/oder um dieses Schmiermittel umfänglich um das andere Zahnrad (14) zu lenken.

10. Mechanismus nach einem der vorangehenden Ansprüche, wobei sich die Kanalisationseinrichtung (32) in Bezug auf das Rad mit dem größeren Durchmesser (14) umfänglich erstreckt.

11. Mechanismus nach einem der vorangehenden Ansprüche, wobei die Kanalisationseinrichtung (32) ein geschlossenes erstes Längsende (33A) und ein offenes zweites Längsende (33B) besitzt.

## Claims

1. A sparging-lubricated mechanism, comprising a housing (4) and a drive or transmission gearing (6) disposed within the housing (4), the gearing (6) possessing two toothed gear wheels (12, 14) provided with respective toothings (16, 18) intermeshing within a meshing zone (19), each toothing (16, 18) having a first lateral surface (24, 26) and a second lateral surface (28, 30) opposite thereto, the mechanism further also comprising a channel member (32) separate from the housing (4), fixed relative to the housing (4), delimiting a channel (33) and disposed to be facing the first lateral surfaces (24, 26) to the right of the meshing zone (19) in order to channel the lubricant expelled from the meshing zone (19) from the first lateral surfaces (24, 26) circumferentially in the meshing zone (19).

2. The mechanism according to claim 1, in which the channel member (32) cooperates in a sealing manner with a sealing surface provided on at least one toothed gearwheel (12, 14).

3. The mechanism according to claim 2, in which the channel member (32) cooperates in a sealing manner with a sealing surface of each toothed gear wheel (12, 14).

4. The mechanism according to claim 3, in which at least one toothed gear wheel (12, 14) possesses a sealing surface that is perpendicular to the axis of rotation of this toothed gearwheel (12, 14).

5. The mechanism according to any one of claims 2 to 4, in which at least one toothed gear wheel (12, 14) possesses a sealing surface of revolution about the axis of rotation of the toothed gear wheel (12, 14) and having an extension along the said axis of rotation.

6. The mechanism according to any one of claims 2 to 5, in which at least one toothed gear wheel (12, 14) possesses a cylindrical sealing surface that is centered on the axis of rotation of the toothed gear wheel (12, 14).

7. The mechanism according to any one of claims 2 to 6, in which the channel member (32) is configured so as to scrape a sealing surface of a toothed gear wheel (12, 14).

8. The mechanism according to any one of claims 2 to 7, in which the channel member (32) cooperates in a sealing manner with a sealing surface of at least one toothed gear wheel by means of a labyrinth sealing system.

9. The mechanism according to any one of the preceding claims, comprising a deflector (44) disposed in the space delimited between the toothings (16, 18) of two toothed gear wheels (12, 14) immediately downstream of the meshing zone (19) when considering the direction of rotation of the toothed gear wheels (12, 14) about their axes of rotation (A1, A2), the deflector (44) extending over the entire width of the teeth of the toothed gear wheels (12, 14) of the gearing (6) and being configured so as to divert the lubricant flowing circumferentially around a toothed gear wheel (12) away from the latter and/or to direct this lubricant circumferentially around the other toothed gear wheel (14).

10. The mechanism according to any one of the preceding claims, in which the channel member (32) extends circumferentially relative to the larger diameter gear wheel (14).

11. The mechanism according to any one of the preceding claims, in which the channel member (32) has a closed first longitudinal end (33A) and an open second longitudinal end (33B).
